# EUROPEAN PATENT APPLICATION

(11) **EP 4 671 549 A1**
(43) Date of publication of application: **31.12.2025**
(21) Application number: 24183946.3
(22) Date of filing: 24.06.2024
(51) Int. Cl.: F16B 5/07, B60K 15/067, B62D 21/09, F16B 2/08

(54) **A BRACKET ARRANGEMENT**

(71) Applicant: VOLVO TRUCK CORPORATION, 405 08 Göteborg (SE)
(72) Inventor: SONDEREGGER, Sigurd, 436 37 ASKIM (SE); BERNHARDSSON, Magnus, 411 28 GÖTEBORG (SE); HAGBY, Anton, 414 78 GÖTEBORG (SE)
(74) Representative: Kransell & Wennborg KB

(57) **Abstract**

The present disclosure relates to a bracket arrangement (100), comprising a first bracket (102), comprising a first interface (104) arranged to connect the first bracket (102) to a vehicle equipment (30), the first bracket (102) comprising at least one hook member (106) comprising a first slanted portion (108), a second bracket (202), comprising a second interface (204) arranged to connect the second bracket (202) to a vehicle frame (400), the second bracket (202) comprising a ridge (206) extending in a transversal direction (T) of the second bracket (202), wherein a portion of the ridge (206), in an assembled state, receives the at least one hook member (106), the ridge (206) comprising at least one protrusion (208) comprising a first transversal end surface (210), wherein, in the assembled state, the first transversal end surface (210) is arranged in abutment with the first slanted portion (108) to prevent transversal displacement of the at least one hook member (106).

## Description

### TECHNICAL FIELD

The disclosure relates generally to connection of vehicle equipment to a vehicle frame of a vehicle. In particular aspects, the disclosure relates to a bracket arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During assembly of a vehicle equipment to a vehicle frame of the vehicle, brackets are conventionally used as an intermediate component between the vehicle equipment and the vehicle frame. In particular, the bracket may preferably be attached to the vehicle frame by e.g. bolts or screws, whereby the vehicle equipment can be aligned with mounting points of the bracket and attached to the bracket.

However, even though brackets are conventional connector elements between a vehicle equipment and the vehicle frame, there are still room for improvements of these brackets to e.g. reduce assembly time of the vehicle equipment to the vehicle frame, improvements of a docking sequence when using e.g. an automated ground vehicle (AGV) for transporting and docking the vehicle equipment to the vehicle frame.

### SUMMARY

According to a first aspect of the disclosure, a bracket arrangement is provided. The bracket arrangement comprises a first bracket, comprising a first interface arranged to connect the first bracket to a vehicle equipment, the first bracket comprising at least one hook member comprising a first slanted portion, a second bracket, comprising a second interface arranged to connect the second bracket to a vehicle frame, the second bracket comprising a ridge extending in a transversal direction of the second bracket, wherein a portion of the ridge, in an assembled state, receives the at least one hook member, the ridge comprising at least one protrusion comprising a first transversal end surface, wherein, in the assembled state, the first transversal end surface is arranged in abutment with the first slanted portion to prevent transversal displacement of the at least one hook member.

The first aspect of the disclosure may seek to reduce the complexity of attaching a vehicle equipment to the vehicle frame of the vehicle. A technical benefit may include that the use of first and second brackets allows the first bracket to be pre-mounted to the vehicle equipment and the second bracket to be pre-mounted to the vehicle frame. Further, when assembling the first and second brackets to each other, the first slanted portion of the at least one hook member is allowed to be slightly offset from the first transversal end surface of the at least one protrusion of the ridge. Hence, the first and second brackets may be self-aligned by means of the first slanted portion. The tolerances for misalignment during assembly may be beneficial and can enable for a more rapid and efficient assembly process of the vehicle equipment to the vehicle frame. The use of the at least one hook may also simplify a disassembly process, since the first bracket may be simply lifted in a vertical direction from the second bracket when aiming to remove the vehicle equipment from the vehicle frame. As such, the bracket arrangement may be particularly beneficial for aftermarket service operation.

In addition, by arranging the transversal end surface of the ridge's at least one protrusion in abutment with the first slanted portion, transversal displacement of the hook member, and in turn the first bracket is prevented. In addition, vertical upwards displacement can be prevented since the hook member hangs on the ridge. The weight of the vehicle equipment may in turn provide for a downward directing force due to gravity. Also, displacement in a direction perpendicular to the transversal and vertical directions may also be prevented by the interface between the at least one hook and the ridge.

Optionally in some examples, including in at least one preferred example, the at least one hook member comprises a second slanted portion, and wherein the at least one protrusion comprises a second transversal end surface arranged in abutment with the second slanted portion in the assembled state. A technical benefit may include that the at least one hook member may interfere with two surfaces of the protrusion thereby further preventing transversal displacement of the at least one hook member relative to the second bracket.

Optionally in some examples, including in at least one preferred example, the first and second slanted portions are mirrored slanted portions of the at least one hook member.

Optionally in some examples, including in at least one preferred example, the first and second transversal end surfaces are mirrored transversal end portions of the at least one protrusion.

A technical benefit may include that the mirrored slanted portions are each arranged in abutment with a respective mirrored transversal end surface of the at least one protrusion, whereby a symmetric interface may be formed. A uniform load distribution may hereby be obtained.

Optionally in some examples, including in at least one preferred example, the first bracket comprises a first hook member and a second hook member, the first and second hook members being arranged on a respective transversal side of the at least one protrusion. A technical benefit may include that the at least one protrusion may be arranged as a wedge between the first and second hook members. Further, the arrangement may enable for an even further simplified assembly process by simply directing the first bracket to the second bracket such that the first and second hook members are arranged on a respective side of the at least one protrusion.

Optionally in some examples, including in at least one preferred example, the first slanted portion is arranged on the first hook member and the second slanted portion is arranged on the second hook member. The interface between the first slanted portion and the first transversal end surface may thus prevent transversal displacement in a first transversal direction, while the interface between the second slanted portion and the second transversal end surface may prevent transversal displacement in a second transversal direction. A further technical benefit may include that either of the first or second slanted portions can slide along the respective first or second transversal end surfaces. The first bracket can thus be assembled to the second bracket by a slight misalignment in any of the first or second transversal directions.

Optionally in some examples, including in at least one preferred example, the at least one hook member comprises a first inclined portion, the first inclined portion being arranged in abutment with the portion of the ridge in the assembled state. A technical benefit may include that the first inclined portion of the at least one hook may slide along the portion of the ridge during assembly. Hence, yet further simplification of the assembly process of the first and second brackets may be obtained. Also, the first inclined portion may enable for an improved load distribution between the first and second brackets, as the load may be divided into a vertical force component and a horizontal force component.

Optionally in some examples, including in at least one preferred example, the at least one protrusion protrudes from the ridge in a direction perpendicular to the transversal direction of the ridge.

Optionally in some examples, including in at least one preferred example, the at least one protrusion extends transversally along the ridge. A technical benefit may include that the at least one protrusion has a substantial size to be able to sustain the loads generated during operation of the vehicle to which the bracket arrangements is connected.

Optionally in some examples, including in at least one preferred example, the first transversal end surface of the protrusion is an angled first transversal end surface. A technical benefit may include that the angled first transversal end surface may be designed to mate with the slanted portion of the hook member, thereby providing for an improved abutment interface between these components.

Optionally in some examples, including in at least one preferred example, the first bracket comprises a first bracket surface, and the second bracket comprises a second bracket surface, the first and second bracket surfaces being arranged in abutment with each other in the assembled state. A technical benefit may include that a further interface between the first and second brackets is obtained, whereby the connection between the first and second brackets can be further improved and rattle between the first and second brackets may be substantially avoided.

Optionally in some examples, including in at least one preferred example, the bracket arrangement further comprises a fastener element arranged to fixate the first and second brackets to each other. A technical benefit may include that the fixation between the first and second brackets may be further improved. In particular, when the bracket arrangement is connected to a vehicle and the vehicle is exposed to vibration loads, the fastener element may prevent the first bracket from bumping off the second bracket.

Optionally in some examples, including in at least one preferred example, the fastener element is an elongated fastener element connected to an aperture of the second bracket, the aperture extends into the second bracket from the second bracket surface. The fastener element may be a screw or a bolt. The aperture may thus be a hole, either a through hole or a non-through hole.

Optionally in some examples, including in at least one preferred example, the aperture extends in an inclined direction away from the ridge. A technical benefit may include that the accessibility of the fastener element may be improved. In detail, when the first bracket is assembled to the second bracket, an operator may gain simple access to the fastener element from above the bracket arrangement and attach the fastener element at an angled direction such that the first and second brackets are fixated to each other.

Optionally in some examples, including in at least one preferred example, the aperture comprises internal threads, the fastener element being threaded to the internal threads of the aperture in the assembled state.

Optionally in some examples, including in at least one preferred example, the first bracket comprises at least one additional hook member arranged vertically offset from the at least one hook member, the at least one additional hook member comprising an additional first slanted portion. A technical benefit may include that the interconnection between the first and second brackets may be even further improved.

Optionally in some examples, including in at least one preferred example, the second bracket comprises an additional ridge extending in the transversal direction of the second bracket, wherein a portion of the additional ridge is configured to receive the at least one additional hook member, the additional ridge comprising at least one additional protrusion comprising a first transversal end surface, wherein, in the assembled state, the first transversal end surface of the at least one additional protrusion being arranged in abutment with the additional first slanted portion. A technical benefit may include that, during assembly, the hook members arranged vertically offset from each other may be connected to their respective ridge at substantially the same time. Hence, an operator may simply focus on correctly aligning the upper one of the hook members to the upper ridge, whereby the lower one of the hook members will be arranged in a substantially correct position relative to the lower ridge to which it is to be connected.

According to a second aspect, there is provided a vehicle comprising the bracket arrangement of any one of the examples described above in relation to the first aspect.

Effects and features of the second aspect are largely analogous to those described above in relation to the first aspect.

According to a third aspect, there is provided a method of assembling a bracket arrangement according to any one of the examples described above in relation to the first aspect, the method comprising: arranging the first bracket at a distance from the second bracket, the first bracket being arranged at an elevated position relative to the second bracket, moving the first bracket towards the second bracket until a first bracket surface of the first bracket is arranged in abutment with a second bracket surface of the second bracket, and subsequently: lowering the first bracket relative to the second bracket such that the at least one hook member hooks onto the ridge and the first transversal end surface of the second bracket is arranged in abutment with the first slanted portion of the at least one hook member.

The third aspect of the disclosure may seek to simplify the assembly process of a bracket arrangement. A technical benefit may include that a more rapid and simple assembly of the first bracket to the second bracket may be obtained.

Optionally in some examples, including in at least one preferred example, the method further subsequently comprising: fixating the first and second brackets to each other using a fastener element.

Further effects and features of the third aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a suspension arrangement for connecting a vehicle equipment to a vehicle frame of the vehicle according to an example,
Figs. 3A - 3C are exemplary illustrations of a first bracket that forms part of a bracket arrangement according to an example,
Figs. 4A - 4B are exemplary illustrations of a second bracket that forms part of a bracket arrangement according to an example,
Fig. 5 is an exemplary illustration of the first and second brackets in an assembled state,
Figs. 6A - 6C are exemplary illustrations of a first bracket that forms part of a bracket arrangement according to another example,
Figs. 7A - 7B are exemplary illustrations of a second bracket that forms part of a bracket arrangement according to an example, and
Fig. 8 is an exemplary flow chart of a method of assembling a bracket arrangement according to an example.

### DETAILED DESCRIPTION

The detailed description set forth below provides information and examples of the disclosed technology with sufficient detail to enable those skilled in the art to practice the disclosure.

The disclosure described in the following seeks to reduce the complexity of attaching a vehicle equipment to the vehicle frame of the vehicle. A technical benefit may include that the use of the below described first and second brackets allows the first bracket to be pre-mounted to the vehicle equipment and the second bracket to be pre-mounted to the vehicle frame, whereafter a simple and efficient assembly of these bracket can be obtained.

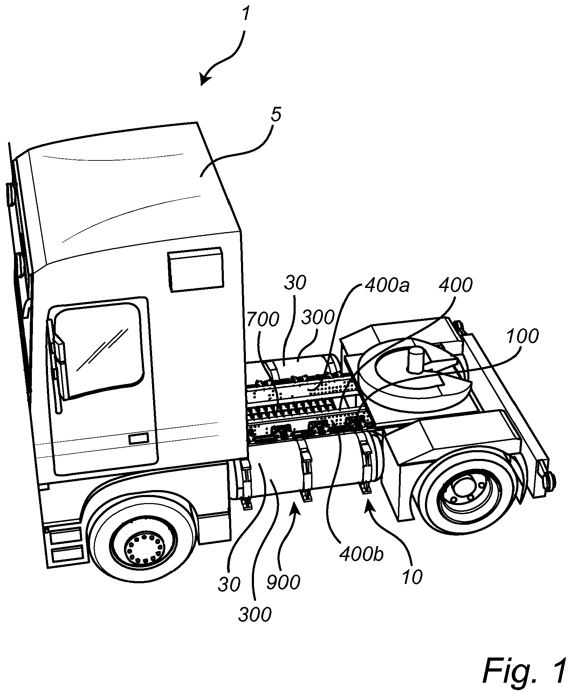

Fig. 1 is an exemplary illustration of a vehicle according to an example. In particular, Fig. 1 which is a perspective view of a vehicle 1 in the form of a truck. The vehicle comprises a cab 5 in which a driver controls operation of the vehicle. The vehicle is preferably propelled by means of one or more electric traction motors, preferably in the form of electric motors which receives electric power from one or more batteries or one or more fuel cells. The following will describe the vehicle 1 the form of a fuel cell truck which comprises one or more hydrogen tanks arranged to contain hydrogen for operating the fuel cell(s). The vehicle may also, in addition or as an alternative, comprise one or more vehicle batteries. Also, the vehicle 1 may also be propelled by a conventional internal combustion engine, or by a hydrogen propelled internal combustion engine.

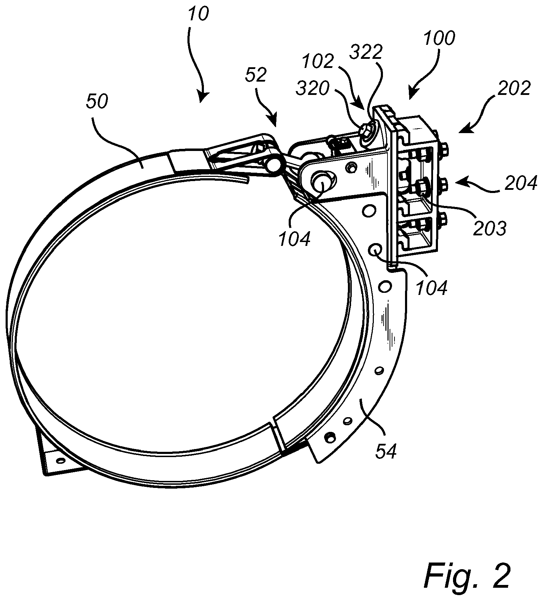

As is further illustrated in Fig. 1, the vehicle 1 comprises a chassis arrangement 900, wherein the chassis arrangement comprises a vehicle frame 400. The vehicle frame 400 comprises a first frame portion 400a, and a second frame portion 400b. In the following, the first and second frame portions may also be referred to as a pair of longitudinally extending frame rails 400a, 400b. The chassis arrangement further comprises one or more suspension arrangements 10 comprising a bracket arrangement 100 (shown and exemplified in further detail in Figs. 2 - 6B) connected to the pair of longitudinally extending frame rails 400a, 400b. The suspension arrangement 10 is arranged to suspend a vehicle equipment 30 to the vehicle frame 400. In the following, the vehicle equipment 30 will is exemplified as a gas tank 300 suspended laterally of each of the respective longitudinally extending frame rails 400a, 400b by the suspension arrangement 10. A battery arrangement 700 may also be arranged laterally between the pair of longitudinally extending frame rails 400a, 400b.

Fig. 2 is an exemplary illustration of the suspension arrangement 10 for connecting the vehicle equipment to a vehicle frame of the vehicle according to an example. In particular, Fig. 2 is a perspective view of the suspension arrangement 10 where the above described gas tank 300 has been omitted for simplifying for the skilled reader. The suspension arrangement 10 comprises a bracket arrangement 100. The bracket arrangement 100 comprises a first bracket 102 and a second bracket 202. The bracket arrangement 100 can thus be construed as a two-part bracket arrangement.

The first bracket 102 comprises a first interface 104 which is arranged to connect the first bracket 102 to the vehicle equipment 30. In the example depicted in Fig. 2, the first interface 104 is connected to a strap 50 via a first 52 and a second 54 strap connector element. The vehicle equipment 30 is hereby connected to the first interface 104 and, in the exemplification, enclosed by the strap 50 and the first bracket 102.

The second bracket 202 comprises a second interface 204 which is arranged to connect the second bracket 202 to the vehicle frame 400. In the example depicted in Fig. 2, the second interface 204 comprises holes 203 in which screws or bolts can be arranged. The screws or bolts can be directed through corresponding holes in the vehicle frame 400 and fixate the second bracket 202 to the vehicle frame 400 by e.g. nuts.

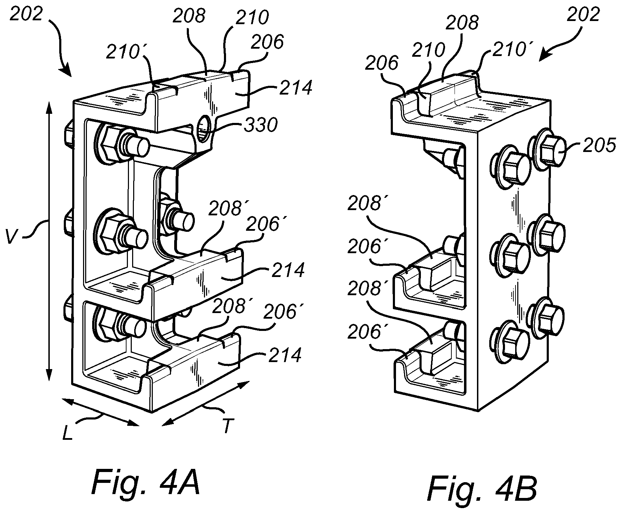

Furthermore, the exemplified bracket arrangement 100 also comprises a fastener element 320. The fastener element 320 is arranged to fixate the first 102 and second 202 brackets to each other. In the example depicted in Fig. 2, the fastener element 320 is an elongated fastener element, preferably a screw or bolt. The first bracket 102 comprises an aperture 322 which is inclined in a downward direction towards the second bracket 202. The second bracket 202 comprises a corresponding aperture (330 as can be seen in Fig. 4A) into which the elongated fastener element 320 is connected. The elongated fastener element 320 may preferably be threaded to internal threads of the aperture 330 in the second bracket 202. An operator may hereby connect the first 102 and second 202 brackets to each other with the fastener element 320. In particular, the operator may easily reach the fastener element 320 from above and the inclined elongation of the apertures in both of the first 102 and second 202 brackets may allow the operator to reach the head of the fastener by a fastener tool or similar in a convenient manner.

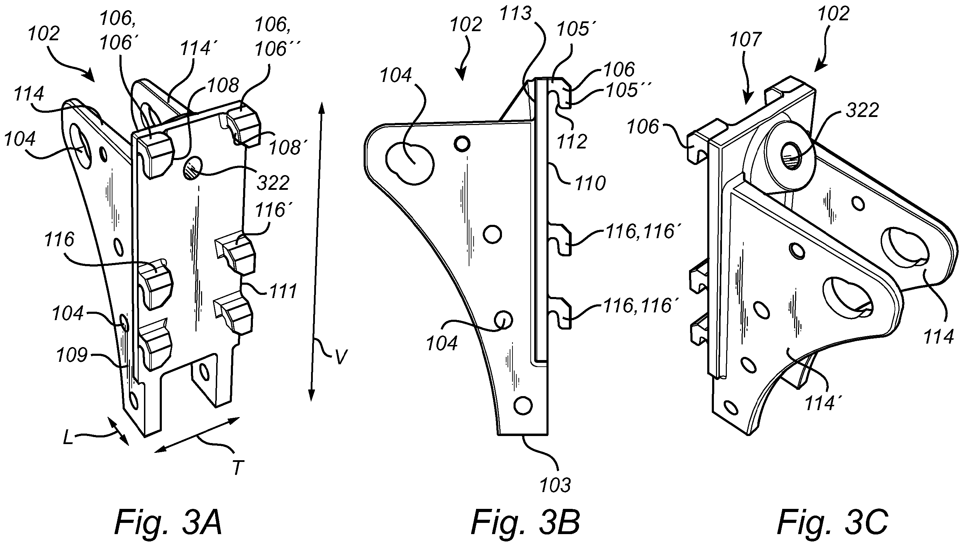

To describe the first bracket 102 in further detail, reference is made to Figs. 3A - 3C which are exemplary illustrations of the first bracket 102 that forms part of the above described bracket arrangement 100 according to an example. As can be seen in relation to Fig. 3A, the first bracket 102 extends in a transversal direction T, a vertical direction V, and a longitudinal direction L. The transversal direction T as well as the longitudinal direction L of the first bracket 102 as well as for the overall bracket arrangement does hence not correspond to a corresponding transversal direction and longitudinal direction of the vehicle. The above described first interface 104 is detailed and exemplified as comprising openings to which the strap 50 and the strap connector elements 52, 54 can be connected.

The first bracket 102 further comprises a first bracket surface 110. The first bracket surface 110 extends in the vertical V and transversal T directions of the first bracket 102 and is arranged to face the second bracket 202 when the bracket arrangement 100 is assembled. The first bracket 102 also comprises a secondary surface 113 arranged opposite from the first bracket surface 110. Hence, the secondary surface 113 faces away from the second bracket 202 in the assembled state of the bracket arrangement 100. The first interface 104 is arranged on a pair of arms 114, 114' which are arranged on the secondary surface 113 in the vertical direction V and extends from the secondary surface 113 in the longitudinal direction L.

Moreover, the first bracket 102 comprises at least one hook member 106. In the example depicted in Figs. 3A - 3C, the first bracket 102 comprises a pair of hook members 106, i.e. a first hook member 106' and a second hook member 106". The first 106' and second 106" hook members are spaced apart from each other in the transversal direction T such that an open portion 107 is arranged between first 106' and second 106" hook members. Further, the first bracket 102 is exemplified as comprising three rows, where each row comprises a respective first 106' and second 106" hook member. Hence, the second and third rows comprises at least one additional hook member 116, 116' arranged vertically offset from the uppermost hook member. The additional hook member(s) 116, 116' may comprise similar features as the uppermost hook member(s) described in the following.

The at least one hook member 106 is arranged on the first bracket surface 110. In particular, the at least one hook member 106 has a first protruding portion 105' arranged on the first bracket surface 110 and protrudes in a direction away from the first interface 104, and a second protruding portion 105" arranged on the first protruding portion 105'. The second protruding portion 105" protrudes in a direction towards a bottom end 103 of the first bracket 102.

Further, the hook member 106 comprises a first slanted portion 108. The first slanted portion 108 slants in a direction from the protruding portion 105' in the vertical direction V towards the bottom end 103, as well as in the transversal direction T towards a first transversal end side 109 of the first bracket 102. In the example depicted in Fig. 3A, the first slanted portion 108 is arranged on the first hook member 106'. The second hook member 106" comprises a second slanted portion 108'. The first 108 and second 108' slanted portions may be similar in shape and may be mirrored slanted portions. The second slanted portion 108' slants in a direction from the first protruding portion 105' in the vertical direction V towards the bottom end 103, as well as in the transversal direction T towards a second transversal end side 111 of the first bracket 102. In further detail, the first 108 and second 108' slanted portions slants in a direction away from each other.

Furthermore, the hook member 106 may also comprise a first inclined portion 112. The first inclined portion 112 is arranged on the second protruding portion 105" of the hook member 106, wherein the first inclined portion 112 comprises a surface facing the first bracket surface 110. The first inclined portion 112 is inclined away from the first bracket surface 110 in a direction from the first protruding portion towards the bottom end 103 of the first bracket 102.

In order to describe the second bracket 202 in further detail, reference is now made to Figs. 4A - 4B, which are exemplary illustrations of the second bracket 202 that forms part of a bracket arrangement according to an example. As can be seen in relation to Fig. 4A, the second bracket 202 extends in the transversal direction T, the vertical direction V, and the longitudinal direction L. The above described second interface 204 is detailed with the screws 205 connected to the above described holes 203 for connecting the second bracket 202 to the vehicle frame 400.

Further, the second bracket 202 comprises the above described aperture 330. Although not depicted, the aperture may comprise internal threads of which the fastener element (320 in Fig. 2) can be threaded to fixate the first 102 and second brackets to each other. In particular, the second bracket 202 comprises a second bracket surface 214. The second bracket surface 214 extends in the vertical V and transversal T directions of the second bracket 202 and is arranged to face the first bracket 102 when the bracket arrangement 100 is assembled. The aperture 330 extends into the second bracket 202 from the second bracket surface 214 and in a direction towards the second interface 204. The aperture 330 may extend in an inclined direction in the vertical V and longitudinal direction L, i.e. in an inclined direction away from a ridge of the second bracket 202 that will be described in further detail below.

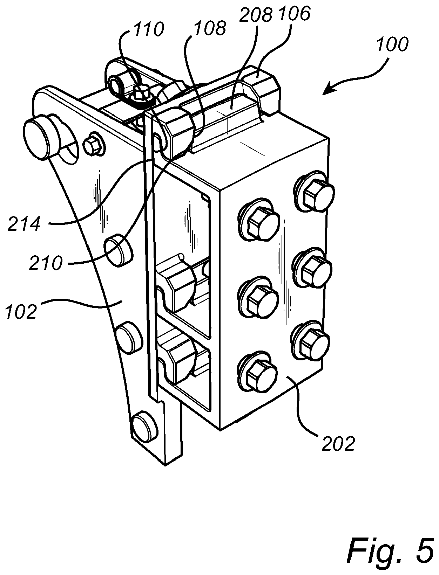

The second bracket 202 also comprises a ridge 206. The ridge 206 extends in the transversal direction T of the second bracket 202. As will be evident from Fig. 5, a portion of the ridge 206 receives the at least one hook member 106 of the first bracket 102 in an assembled state of the bracket arrangement 100.

Further, the ridge 206 comprises at least one protrusion 208. In the example depicted in Figs. 4A - 4B, the ridge 206 comprises a single protrusion 208. As illustrated, the protrusion 208 protrudes from the ridge 206 in a direction perpendicular to the transversal direction of the ridge, i.e. in the longitudinal direction L of the second bracket 202. Also, the protrusion 208 extends in the transversal direction T.

The protrusion 208 comprises a first transversal end surface 210. The protrusion 208 depicted in Figs. 4A - 4B also comprises a second transversal end surface 210'. The first 210 and second 210' transversal end surfaces each face in a respective transversal direction T. The first 210 and second 210' transversal end surfaces depicted in Figs. 4A - 4B are mirrored transversal end portions of the at least one protrusion 208. According to an example, the first 210 and second 210' transversal end surfaces may each be angled end surfaces. Hereby, the protrusion 208 comprises a trapezoidal shape.

Furthermore, the second bracket 202 may comprise an additional ridge 206' extending in the transversal direction T of the second bracket 102, wherein the additional ridge 206' comprises at least one additional protrusion 208'. The additional ridge 206' and the additional protrusion 208' are spaced apart vertically from the above described ridge 206 and protrusion 208 and may comprise the same features as described above for the uppermost ridge 206 and protrusion 208.

To describe the bracket arrangement 100 in an assembled state, reference is made to Fig. 5. In the assembled state, the first transversal end surface 210 of the of the second bracket 202 is arranged in abutment with the first slanted portion 108 of the hook member 106. Hereby, transversal displacement of the hook member 106 is prevented. In the example depicted in Fig. 5, the first bracket 102 comprises the above described first 106' and second 106" hook members. In the assembled state, the first 106' and second 106" hook members are arranged on a respective transversal side of the protrusion 208. In other words, the protrusion 208 is arranged between the first 106' and second 106" hook members.

In addition, the first bracket surface 110 of the first bracket 102 is arranged in abutment with the second bracket surface 214 of the second bracket 202 in the assembled state. Also, the first inclined portion 112 of the hook member 106 is arranged in abutment with at least a portion of the ridge 206.

Further, in the assembled state, the additional ridge 206' receives the additional hook member 116, 116' in a similar vein as the interface between the above described uppermost hook member 106 and the uppermost ridge 206.

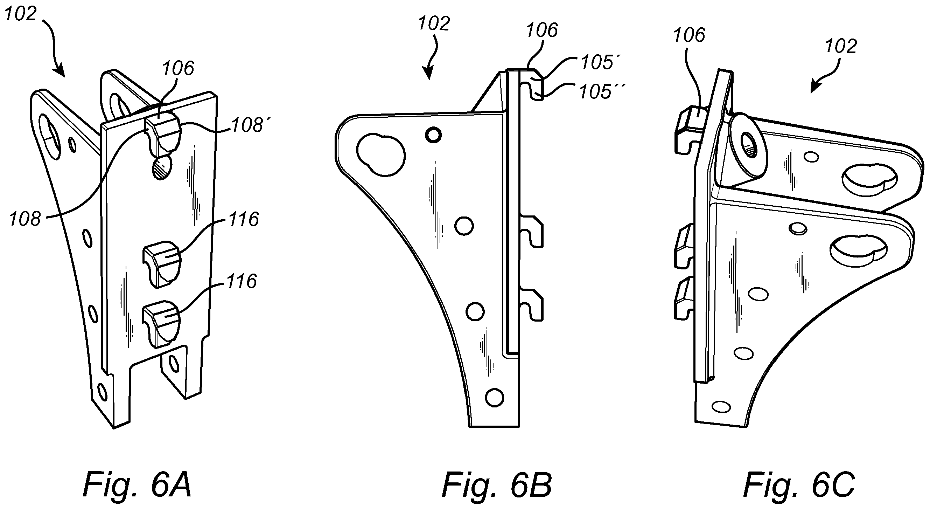

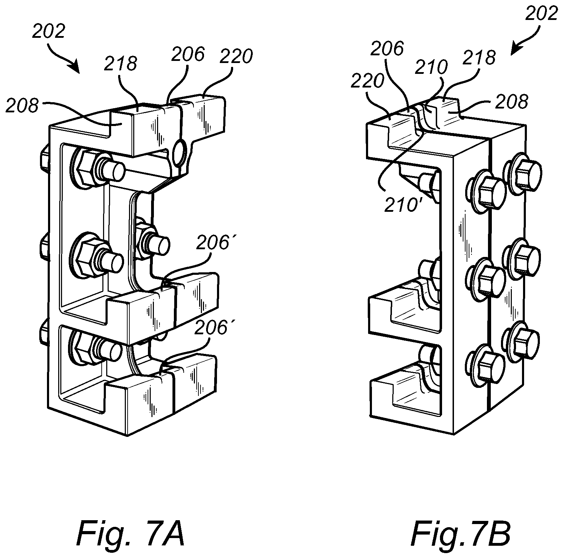

To describe the first bracket 102 as well as the second bracket 202 of the bracket arrangement 100 according to another example, reference is made to Figs. 6a - 6C and Figs. 7A - 7B. The main difference between the bracket arrangement 100 described in relation to Figs. 3A - 3C and Figs 4A - 4B and the bracket arrangement 100 described in the following is that the first bracket 102 comprises a single hook member 106 at an upper end. By single hook member 106 should be construed as one hook member 106 for each row of hook members. The first bracket 102 may thus, as illustrated in Figs. 4A - 4C, comprise a first and a second additional hook member 116 spaced vertically downwards from the uppermost hook member 106.

The single hook member 106 comprises a first slanted portion 108 and a second slanted portion 108' which are arranged on a respective transversal end side of the hook member 106. The first 108 and second 108' slanted portions are mirrored slanted portions of the single hook member 106. The single hook member 106 also comprises the above described first 105' and second 105" protruding portions. Further features of the hook member of the first bracket 102 corresponds to the features described above in relation to Figs. 3A - 3C.

The second bracket 202 on the other hand comprises a ridge 206 comprising a pair of protrusions 208. Put it differently, the ridge 206 comprises a first protrusion 218 and a second protrusion 220. The first protrusion 218 comprises a first transversal end surface 210 and the second protrusion 220 comprises a second transversal end surface 210'. The first 210 and second 210' transversal end surfaces are mirrored transversal end portions of the pair of protrusions 208. Preferably, the first 210 and second 210' transversal end surfaces are angled to form an open portion 107 there between, the open portion being arranged in the form of a wedge. Further, the second bracket 202 exemplified in Figs. 7A - 7B also comprises a pair of additional ridges 206' arranged in a similar manner as the uppermost ridge 206. Further features of the ridge 206 and protrusion of the second bracket 202 corresponds to the features described above in relation to Figs. 4A - 4B.

In the assembled state, the single hook member 106 of the first bracket 102 is hereby arranged between the first 218 and second 220 protrusions of the second bracket. Otherwise, the interference between the first and second brackets in the assembled state corresponds to the interference described above and illustrated in Fig. 5.

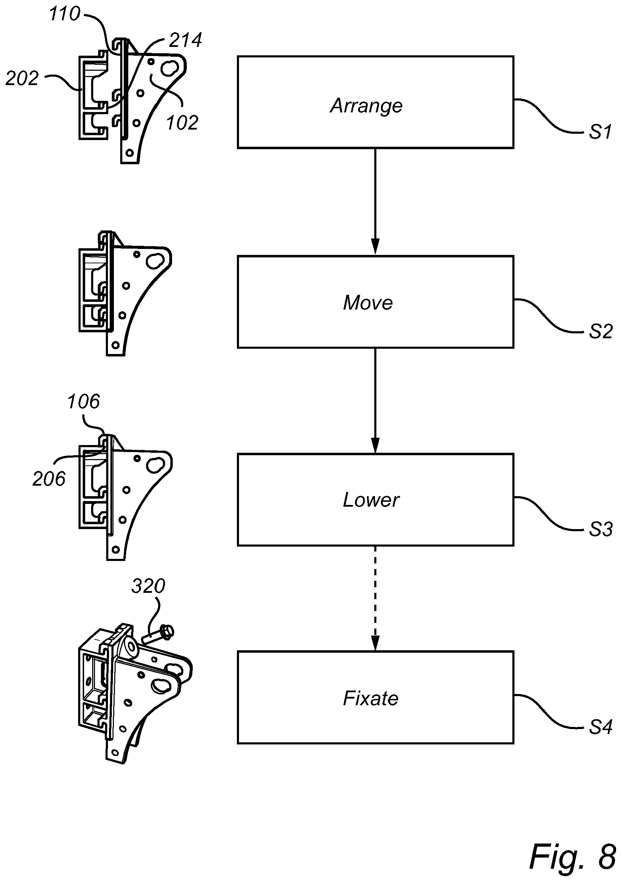

Reference is made to Fig. 8. Fig. 8 is an exemplary flow chart of a method of assembling a bracket arrangement 100 according to an example. When connecting the first bracket 102 to the second bracket 202, the first bracket 102 is initially arranged S1 at a distance from the second bracket 202. The first bracket 102 is arranged at a slightly elevated position relative to the second bracket 202, i.e. arranged at a vertically higher position.

The first bracket 102 is thereafter moved S2 towards the second bracket 202. In particular, the first bracket 102 is moved towards the second bracket 202 until the first bracket surface 110 of the first bracket 102 is arranged in abutment with the second bracket surface 214 of the second bracket 202. Thereafter, the first bracket 102 is lowered S3 relative to the second bracket 202. In particular, the first bracket 102 is lowered in the vertical direction V until the at least one hook member 106 hooks onto the ridge 206 and the first transversal end surface of the second bracket is arranged in abutment with the first slanted portion of the at least one hook member.

Furthermore, the method may additionally comprise to fixate S4 the first 102 and second 202 brackets using the above described fastener element 320.

### EXAMPLE LIST

Example 1. A bracket arrangement, comprising: a first bracket, comprising a first interface arranged to connect the first bracket to a vehicle equipment, the first bracket comprising at least one hook member comprising a first slanted portion, a second bracket, comprising a second interface arranged to connect the second bracket to a vehicle frame, the second bracket comprising a ridge extending in a transversal direction of the second bracket, wherein a portion of the ridge, in an assembled state, receives the at least one hook member, the ridge comprising at least one protrusion comprising a first transversal end surface, wherein, in the assembled state, the first transversal end surface is arranged in abutment with the first slanted portion to prevent transversal displacement of the at least one hook member.

Example 2. The bracket arrangement of example 1, wherein the at least one hook member comprises a second slanted portion, and wherein the at least one protrusion comprises a second transversal end surface arranged in abutment with the second slanted portion in the assembled state.

Example 3. The bracket arrangement of example 2, wherein the first and second slanted portions are mirrored slanted portions of the at least one hook member.

Example 4. The bracket arrangement of any one of examples 2 or 3, wherein the first and second transversal end surfaces are mirrored transversal end portions of the at least one protrusion.

Example 5. The bracket arrangement of any one of the preceding examples, wherein the first bracket comprises a first hook member and a second hook member, the first and second hook members being arranged on a respective transversal side of the at least one protrusion.

Example 6. The bracket arrangement of example 5 when dependent on any one of examples 2-4, wherein the first slanted portion is arranged on the first hook member and the second slanted portion is arranged on the second hook member.

Example 7. The bracket arrangement of any one of the preceding examples, wherein the at least one hook member comprises a first inclined portion, the first inclined portion being arranged in abutment with the portion of the ridge in the assembled state.

Example 8. The bracket arrangement of any one of the preceding examples, wherein the at least one protrusion protrudes from the ridge in a direction perpendicular to the transversal direction of the ridge.

Example 9. The bracket arrangement of any one of the preceding examples, wherein the at least one protrusion extends transversally along the ridge.

Example 10. The bracket arrangement of any one of the preceding examples, wherein the first transversal end surface of the protrusion is an angled first transversal end surface.

Example 11. The bracket arrangement of any one of the preceding examples, wherein the first bracket comprises a first bracket surface, and the second bracket comprises a second bracket surface, the first and second bracket surfaces being arranged in abutment with each other in the assembled state.

Example 12. The bracket arrangement of any one of the preceding examples, further comprising a fastener element arranged to fixate the first and second brackets to each other.

Example 13. The bracket arrangement of example 12 when dependent on example 11, wherein the fastener element is an elongated fastener element connected to an aperture of the second bracket, the aperture extends into the second bracket from the second bracket surface.

Example 14. The bracket arrangement of example 13, wherein the aperture extends in an inclined direction away from the ridge.

Example 15. The bracket arrangement of any one of examples 13 or 14, wherein the aperture comprises internal threads, the fastener element being threaded to the internal threads of the aperture in the assembled state.

Example 16. The bracket arrangement of any one of the preceding examples, wherein the first bracket comprises at least one additional hook member arranged vertically offset from the at least one hook member, the at least one additional hook member comprising an additional first slanted portion.

Example 17. The bracket arrangement of example 16, wherein the second bracket comprises an additional ridge extending in the transversal direction of the second bracket, wherein a portion of the additional ridge is configured to receive the at least one additional hook member, the additional ridge comprising at least one additional protrusion comprising a first transversal end surface, wherein, in the assembled state, the first transversal end surface of the at least one additional protrusion being arranged in abutment with the additional first slanted portion.

Example 18. A vehicle comprising the bracket arrangement of any one of the preceding examples.

Example 19. A method of assembling a bracket arrangement according to any one of examples 1 - 17, the method comprising: arranging the first bracket at a distance from the second bracket, the first bracket being arranged at an elevated position relative to the second bracket, moving the first bracket towards the second bracket until a first bracket surface of the first bracket is arranged in abutment with a second bracket surface of the second bracket, and subsequently: lowering the first bracket relative to the second bracket such that the at least one hook member hooks onto the ridge and the first transversal end surface of the second bracket is arranged in abutment with the first slanted portion of the at least one hook member.

Example 20. The method of example 19, further subsequently comprising: fixating the first and second brackets to each other using a fastener element.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bracket arrangement (100), comprising:
a first bracket (102), comprising a first interface (104) arranged to connect the first bracket to a vehicle equipment (30), the first bracket (102) comprising at least one hook member (106) comprising a first slanted portion (108),
a second bracket (202), comprising a second interface (204) arranged to connect the second bracket to a vehicle frame (400), the second bracket (202) comprising a ridge (206) extending in a transversal direction (T) of the second bracket, wherein a portion of the ridge (206), in an assembled state, receives the at least one hook member (106), the ridge (206) comprising at least one protrusion (208) comprising a first transversal end surface (210), wherein, in the assembled state, the first transversal end surface (210) is arranged in abutment with the first slanted portion (108) to prevent transversal displacement of the at least one hook member.

2. The bracket arrangement (100) of claim 1, wherein the at least one hook member (106) comprises a second slanted portion, and wherein the at least one protrusion (208) comprises a second transversal end surface (210') arranged in abutment with the second slanted portion (110) in the assembled state.

3. The bracket arrangement (100) of any one of the preceding claims, wherein the first bracket comprises a first hook member (106') and a second hook member (106"), the first and second hook members being arranged on a respective transversal side of the at least one protrusion.

4. The bracket arrangement (100) of claim 3 when dependent on claim 2, wherein the first slanted portion is arranged on the first hook member and the second slanted portion is arranged on the second hook member.

5. The bracket arrangement (100) of any one of the preceding claims, wherein the at least one hook member comprises a first inclined portion (112), the first inclined portion being arranged in abutment with the portion of the ridge in the assembled state.

6. The bracket arrangement (100) of any one of the preceding claims, wherein the first transversal end surface of the protrusion is an angled first transversal end surface.

7. The bracket arrangement (100) of any one of the preceding claims, wherein the first bracket comprises a first bracket surface, and the second bracket comprises a second bracket surface, the first and second bracket surfaces being arranged in abutment with each other in the assembled state.

8. The bracket arrangement (100) of any one of the preceding claims, further comprising a fastener element (320) arranged to fixate the first (102) and second (202) brackets to each other.

9. The bracket arrangement (100) of claim 8 when dependent on claim 7, wherein the fastener element (320) is an elongated fastener element connected to an aperture (330) of the second bracket, the aperture extends into the second bracket from the second bracket surface.

10. The bracket arrangement (100) of claim 9, wherein the aperture extends in an inclined direction away from the ridge.

11. The bracket arrangement (100) of any one of claims 9 or 10, wherein the aperture comprises internal threads, the fastener element being threaded to the internal threads of the aperture in the assembled state.

12. The bracket arrangement (100) of any one of the preceding claims, wherein the first bracket comprises at least one additional hook member (116, 116') arranged vertically offset from the at least one hook member, the at least one additional hook member comprising an additional first slanted portion.

13. A vehicle (1) comprising the bracket arrangement of any one of the preceding claims.

14. A method of assembling a bracket arrangement according to any one of claims 1 - 12, the method comprising:
arranging (S 1) the first bracket at a distance from the second bracket, the first bracket being arranged at an elevated position relative to the second bracket,
moving (S2) the first bracket towards the second bracket until a first bracket surface of the first bracket is arranged in abutment with a second bracket surface of the second bracket, and subsequently:
lowering (S3) the first bracket relative to the second bracket such that the at least one hook member hooks onto the ridge and the first transversal end surface of the second bracket is arranged in abutment with the first slanted portion of the at least one hook member.

15. The method of claim 14, further subsequently comprising:
fixating (S4) the first and second brackets to each other using a fastener element.
